# EUROPÄISCHE PATENTSCHRIFT

(11) **EP 1 309 949 B1**
(45) Veröffentlichungstag und Bekanntmachung des Hinweises auf die Patenterteilung: **13.11.2013**
(21) Anmeldenummer: 01960592.2
(22) Anmeldetag: 30.07.2001
(51) Int. Cl.: G07D 7/08

(54) **VERIFIKATION VON DICKENMODULATIONEN IN ODER AUF BLATTGUT**
VERIFICATION OF THICKNESS MODULATIONS IN OR ON SHEET-TYPE PRODUCTS
VERIFICATION DE MODULATIONS D'EPAISSEUR DANS OU SUR UN PRODUIT EN FEUILLE

(30) Priorität: 31.07.2000 DE 10037664
(43) Veröffentlichungstag der Anmeldung: 14.05.2003
(73) Patentinhaber: Giesecke & Devrient GmbH, 81677 München (DE)
(72) Erfinder: WUNDERER, Bernd, 80805 München (DE); SCHANDA, Ulrich, 83607 Holzkirchen (DE)
(86) Internationale Anmeldenummer: PCT/EP2001/008821
(87) Internationale Veröffentlichungsnummer: WO 2002/010716

(56) Entgegenhaltungen:
- EP-A- 0 318 229
- WO-A-00/19191
- US-A- 5 986 457

## Beschreibung

Die Erfindung betrifft ein Verfahren zur Verifikation von Dickenmodulationen, insbesondere Wasserzeichen, in oder auf Blattgut, insbesondere Wert- oder Sicherheitsdokumenten.

Bei der maschinellen Echtheitsprüfung von Wert- oder Sicherheitsdokumenten, wie beispielsweise Banknoten, spielt die Verifikation von Wasserzeichen als Echtheitsmerkmal eine wichtige Rolle. Häufig werden hierzu optische Verfahren eingesetzt, bei welchen eine zu überprüfende Banknote mit Licht bestrahlt wird und das durch die Banknote transmittierte Licht mit Hilfe eines ein- oder zweidimensionalen Photodiodenarrays detektiert wird. Die hierbei erhaltenen Daten werden mit Daten eines Referenzwasserzeichens verglichen, wobei - abhängig vom Grad der Übereinstimmung - die Banknote als echt oder falsch eingestuft wird.

Optische Verfahren haben jedoch im allgemeinen den Nachteil, daß Messungen durch Umgebungslicht leicht gestört werden können und die Empfindlichkeit der üblicherweise verwendeten Photodetektoren sowie die Stärke der eingesetzten Lichtquellen zeitlichen Schwankungen unterliegen, welche ebenfalls die Messung verfälschen. Darüber hinaus ist im allgemeinen eine abbildende Optik aus Linsen und/oder Blenden erforderlich, welche einen hohen Justageaufwand bei der Fertigung und Wartung entsprechender Meßsysteme erfordert.

D1 (WO 00/19191) beschreibt eine Vorrichtung zur Prüfung von Blattgut mittels Schallwellen, die mit geringem technischem Aufwand eine Signalausbeute ermöglicht und insbesondere verhindern soll, dass störende Schallanteile zum Empfänger gelangen können. Dazu schlägt D1 einen speziell ausgestalteten Transportkanal vor, welcher reflektierte beziehungsweise vagabundierende Schallwellen daran hindert, den Empfänger zu erreichen, wodurch die gewünschte Verbesserung einer Messung erreicht werden kann.

Der Erfindung liegt die Aufgabe zugrunde, ein verbessertes Verfahren zur Verifikation von Dickenmodulationen in oder auf Blattgut anzugeben, welches insbesondere den Einfluß von Störungen sowie den Justageaufwand bei der Fertigung und Wartung entsprechender Meßsysteme vermindert.

Diese Aufgabe wird gemäß Anspruch 1 dadurch gelöst, daß das Blattgut mit Schall, insbesondere Ultraschall, beaufschlagt wird, der durch das Blattgut transmittierte und/oder am Blattgut reflektierte Schall an mehreren Stellen des Blattguts gemessen wird und für jede der Stellen mindestens ein für den transmittierten und/ oder reflektierten Schall charakteristischer Wert erzeugt wird. Die Verifikation der Dickenmodulationen erfolgt anschließend durch Vergleich der erzeugten charakteristischen Werte mit vorgegebenen Referenzwerten. Durch die Verwendung von Schall, insbesondere Ultraschall, wird der Einfluß von Störungen, beispielsweise aufgrund von Umgebungslicht, vermieden und darüber hinaus der Justageaufwand reduziert.

In einer bevorzugten Ausgestaltung des Verfahrens ist vorgesehen, daß die Stellen, an welchen der transmittierte oder reflektierte Schall gemessen wird, auf mindestens einer auf dem Blattgut linear verlaufenden Spur liegen. Die Abstände der einzelnen Stellen zueinander können hierbei so gewählt werden, daß eine bestimmte Ortsauflösüng des zu vermessenden Wasserzeichens erreicht wird. Insbesondere können sich die einzelnen Stellen aber auch berühren oder überlappen, so daß auf dem Blattgut eine durchgängige Spur vermessen wird.

Die Erfindung wird nun anhand von Figuren näher erläutert. Es zeigen:
- Fig. 1: eine Vorrichtung zur Durchführung des erfindungsgemäßen Verfahrens;
- Fig. 2: eine ein periodisches Wasserzeichen aufweisende Banknote mit zusätzlich eingezeichneten Spuren; und
- Fig. 3: eine graphische Darstellung von Werten und entsprechenden Referenzwerten.

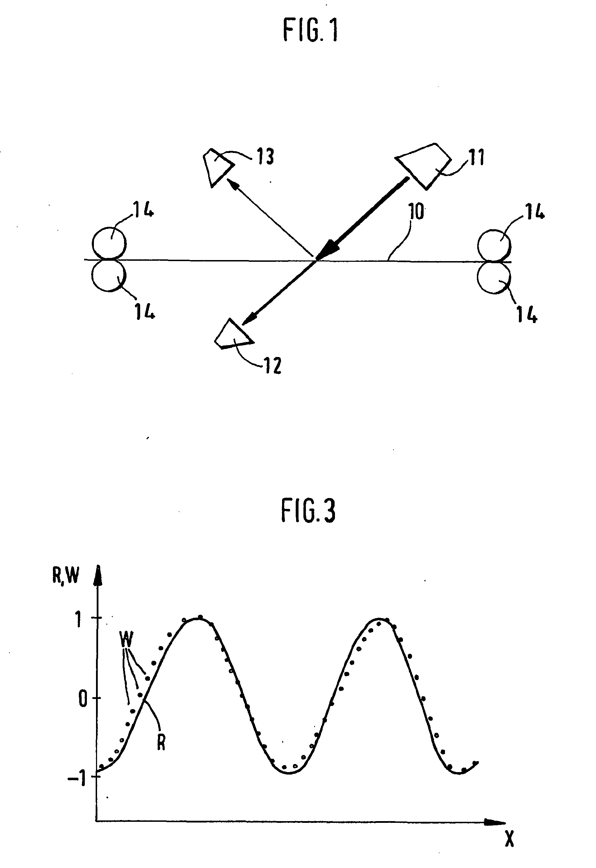

Figur 1 zeigt eine Vorrichtung zur Ausführung des erfindungsgemäßen Verfahrens. Das zu untersuchende Blattgut 10, in diesem Falle eine Banknote, wird mit Hilfe einer hier nur andeutungsweise durch Transportrollen 14 dargestellten Transporteinrichtung zwischen einem Ultraschallsender 11 und einem Ultraschalldetektor 12 transportiert. Der vom Ultraschallsender 11 emittierte und vom Blattgut 10 teilweise transmittierte Schall wird vom Ultraschalldetektor 12 detektiert. Zusätzlich oder alternativ kann der teilweise reflektierte Ultraschall, wie in der Figur dargestellt, von einem weiteren Ultraschalldetektor 13 detektiert werden. Zur Vermeidung von Störsignalen, welche von einer möglichen Reflexion von Schallanteilen zwischen Ultraschallsender 11 und Ultraschalldetektor 12 oder 13 herrühren, sind Ultraschallsender 11, Blattgut 10 und Ultraschalldetektor 12 bzw. 13 in der Weise schräg zueinander angeordnet, daß derartige Reflexionen aus dem Strahlengang zwischen Ultraschallsender 11 und Ultraschalldetektor 12 bzw. 13 ausgeblendet werden. Wie im Beispiel dargestellt, wird hierzu das Blattgut 10 in einem von 90° verschiedenen Winkel mit Ultraschall beaufschlagt. Störsignale lassen sich überdies auch dadurch eliminieren, daß die Schallaufzeit zwischen dem Ultraschallsender 11 und dem Ultraschalldetektor 12 bzw. 13 bestimmt wird und bei der eigentlichen Messung der Ultraschalldetektor 12 bzw. 13 um die Schallaufzeit verzögert eingeschaltet und spätestens mit Ablauf der doppelten Schallaufzeit wieder abgeschaltet wird.

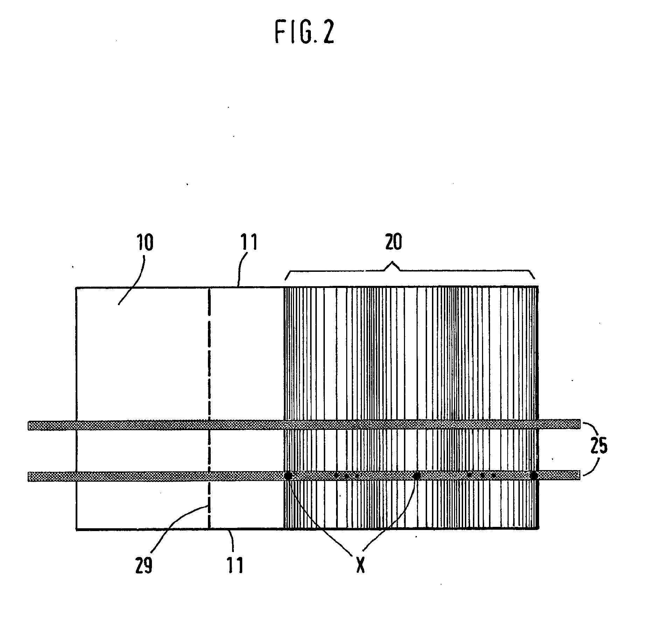

Figur 2 zeigt eine Banknote 10 mit einem Wasserzeichen 20, welches in Richtung der Längskanten 11 periodisch abwechselnd dickere und dünnere Bereiche aufweist. Generell ist das erfindungsgemäße Verfahren jedoch zur Verifikation von Wasserzeichen mit einem beliebigen Verlauf geeignet, beispielsweise einem periodischen Verlauf schräg zu den Längskanten 11 der Banknote oder einem beliebigen nichtperiodischen Verlauf. Zusätzlich zum Wasserzeichen 20 weist die hier dargestellte Banknote 10 einen Sicherheitsfaden 29 auf. In der Figur 2 sind darüber hinaus zwei Spuren 25 angedeutet, entlang derer die Banknote 10 an den Stellen X vermessen wird. Exemplarisch sind in der Figur drei im Bereich des Wasserzeichens 20 liegende Stellen X eingezeichnet. Eine solche Spurmessung wird beispielsweise mit Hilfe der in Figur 1 dargestellten Vorrichtung realisiert. Das Blattgut wird hierbei, vorzugsweise mit einer konstanten Geschwindigkeit, an den Ultraschalldetektoren 12 bzw. 13 vorbeitransportiert. Der reflektierte und/oder transmittierte Schall wird dann in bestimmten Zeitabständen gemessen, so daß zu jedem Zeitpunkt der Messung an einer anderen Stelle X gemessen wird. Eine Spurmessung läßt sich auch dadurch realisieren, daß der reflektierte und/ oder transmittierte Schall mit mehreren, in einer Reihe angeordneten Detektoren (nicht dargestellt) gemessen wird, wobei jedem Detektor eine einzelne Stelle auf dem Blattgut 10 zugeordnet wird.

Figur 3 zeigt ein Diagramm mit Werten W, welche im Bereich des Wasserzeichens 20 auf einer auf der Banknote 10 linear verlaufenden Spur 25 ermittelt wurden. Die Werte W sind hierin über den zugehörigen Stellen X, an welchen sie gemessen wurden, aufgetragen. Im dargestellten Fall handelt es sich um eine Spurmessung, bei welcher die einzelnen Stellen X in einem bestimmten Abstand voneinander entfernt liegen. In dem dargestellten Beispiel zeigen die ermittelten Werte einen im wesentlichen sinusförmigen Verlauf mit einer bestimmten Ortsfrequenz, d.h. Perioden pro Längeneinheit. Zusätzlich sind in dem dargestellten Diagramm Referenzwerte R eingezeichnet (durchgezogene Kurve), welche eine Art Sollverlauf des zu verifizierenden Wasserzeichens mit sinusförmigem Verlauf und bestimmter Ortsfrequenz darstellen. Im allgemeinen tritt zwischen dem Verlauf der Werte W und dem Verlauf der Referenzwerte R eine Phasendifferenz auf, welche beispielsweise durch ein schräg zu den Spuren 25 verlaufendes Wasserzeichen verursacht wird. Die im Diagramm dargestellten Werte W und Referenzwerte R wurden daher derart relativ zueinander verschoben, daß die Phasendifferenz vermindert, in diesem Falle minimiert, wurde. Wie dem dargestellten Diagramm ebenfalls zu entnehmen ist, wurden die Werte W wie die Referenzwerte R normiert.

Die Verifikation der im Blattgut 10 befindlichen Dickenmodulationen des Wasserzeichens 20 kann nun durch Vergleich der Werte W mit den Referenzwerten R erfolgen. Für den Vergleich der Werte W mit den Referenzwerten R kann eine Korrelationsfunktion herangezogen werden, welche durch Multiplikation der einzelnen Werte W mit den Referenzwerten R an den Stellen X bestimmt wird. Befindet sich beispielsweise ein Großteil der an den einzelnen Stellen X berechneten Werte der Korrelationsfunktion im Bereich zwischen etwa 0,9 und 1,0, so liegt eine sehr gute Korrelation vor, d.h. die gemessene Dickenmodulation des Wasserzeichens 20 stimmt sehr gut dem vorgegebenen Verlauf der Referenzwerte R überein, so daß das zu verifizierende Wasserzeichen als echt einzustufen ist.

Aus den einzelnen Werten der Korrelationsfunktion kann darüber hinaus durch Mittelung ein Korrelationsfaktor bestimmt werden, welcher zusätzlich oder alternativ zur Korrelationsfunktion für den Vergleich des Werteverlaufs mit dem Referenzwerteverlauf herangezogen wird. Der Korrelationsfaktor kann dann mit einem vorgegebenen Schwellenwert verglichen werden. Liegt der Korrelationsfaktor oberhalb dieses Schwellenwertes, beispielsweise oberhalb von 0,9, so liegt eine sehr gute Korrelation vor und das vermessene Wasserzeichen 20 kann als echt betrachtet werden. Die Berechnung der Korrelationsfunktion bzw. des Korrelationsfaktors stellt ein rechentechnisch besonders einfach handhabbares Verfahren zum Vergleich der Werte W mit den Refernzwerten R dar.

Zur Erhöhung der Zuverlässigkeit des Verfahrens kann auch vorgesehen sein, daß diejenigen Werte W, welche im Bereich von Störungen, insbesondere aufgrund von Verschmutzung, Fremdkörpern oder Abnutzung, der zu verifizierenden Dickenmodulationen liegen nicht zum Vergleich mit den vorgegebenen Referenzwerten herangezogen werden. Beispielsweise werden hierzu die Werte der entsprechenden Stellen, an denen sich die Störungen befinden, auf Null gesetzt und die Anzahl der auf diese Weise erzeugten Nullen festgehalten. Diese Werte liefern keinen Beitrag bei der Berechnung des Korrelationsfaktors, so daß deren Anzahl von der Anzahl von Werten W, über welche gemittelt werden soll, subtrahiert werden muß. Hiermit läßt sich auf besonders einfache Weise der Einfluß von Störungen eliminieren.

Analog zur obenstehend näher erläuterten Verifikation periodischer Wasserzeichen werden zur Untersuchung nichtperiodischer Wasserzeichen die auf einer linearen Spur 25 ermittelten Werte W mit Referenzwerten R verglichen, welche einen nichtperiodischen Verlauf aufweisen. Der vorgegebene nichtperiodische Verlauf der Referenzwerte R kann beispielsweise Informationen zur Banknote oder Banknotensorte, z.B. Wert, Herkunftsland oder Ausgabejahr, beinhalten. Vorzugsweise sind diese Informationen in codierter Form im nichtperiodischen Verlauf enthalten. Das erfindungsgemäße Verfahren eignet sich daher insbesondere zur Untersuchung oder Verifikation von codierten Wasserzeichen auf oder in Banknoten.

## Patentansprüche

1. Verfahren zur Verifikation von Dickenmodulationen, insbesondere Wasserzeichen (20), in oder auf Blattgut (10), wobei
- das Blattgut (10) mit Schall beaufschlagt wird,
- der durch das Blattgut (10) transmittierte und/oder am Blattgut (10) reflektierte Schall an mehreren Stellen (X) des Blattguts (10) gemessen wird,
- für jede der Stellen (X) mindestens ein für den transmittierten und/oder reflektierten Schall charakteristischer Wert (W) erzeugt wird und
- die Verifikation der Dickenmodulationen durch Vergleich der Werte (W) mit vorgegebenen Referenzwerten (R) erfolgt, **dadurch gekennzeichnet,**
**dass** für den Vergleich der Werte (W) mit den Referenzwerten (R) ein Korrelationsfaktor herangezogen wird, der durch Multiplikation der einzelnen Werte (W) mit den Referenzwerten (R) und Mittelung der hieraus erhaltenen Ergebnisse bestimmt wird, wobei diejenigen Werte (W), welche im Bereich von Störungen, insbesondere aufgrund von Knitterfalten, Verschmutzung, Fremdkörpern oder Abnutzung, der zu verifizierenden Dickenmodulationen liegen, nicht zum Vergleich mit den Referenzwerten (R) herangezogen werden.

2. Verfahren nach Anspruch 1, **dadurch gekennzeichnet, dass** die Stellen (X), an welchen der transmittierte oder reflektierte Schall gemessen wird, auf mindestens einer auf dem Blattgut (10) linear verlaufenden Spur (25) liegen.

3. Verfahren nach einem der Ansprüche 1 oder 2, **dadurch gekennzeichnet, dass** Referenzwerte (R) mit einem periodischen Verlauf vorgegeben werden.

4. Verfahren nach Anspruch 3, **dadurch gekennzeichnet, dass** Referenzwerte (R) mit einem sinusförmigen Verlauf vorgegeben werden.

5. Verfahren nach einem der Ansprüche 3 oder 4, **dadurch gekennzeichnet, dass** für den periodischen Verlauf der Referenzwerte (R) eine bestimmte Ortsfrequenz vorgegeben wird.

6. Verfahren nach einem der Ansprüche 3 bis 5, **dadurch gekennzeichnet, daß** die Werte (W) und die Referenzwerte (R) vor dem Vergleich derart relativ zueinander verschoben werden, daß eine gegebenenfalls zwischen den Werten (W) und den Referenzwerten (R) vorhandene Phasendifferenz vermindert wird.

7. Verfahren nach Anspruch 1 oder 2, **dadurch gekennzeichnet, daß** Referenzwerte (R) mit einem nichtperiodischen, insbesondere eine Codierung enthaltenden, Verlauf vorgegeben werden.

8. Verfahren nach einem der Ansprüche 1 bis 7, **dadurch gekennzeichnet, daß** vor der Multiplikation der einzelnen Werte (W) mit den Referenzwerten (R) die Werte (W) und/oder die Referenzwerte (R) normiert werden.

9. Verfahren nach einem der Ansprüche 1 bis 8, **dadurch gekennzeichnet, daß** der Korrelationsfaktor mit mindestens einem vorgegebenen Schwellenwert verglichen wird.

## Claims

1. A method for verifying thickness modulations, in particular watermarks (20), in or on sheet material (10), wherein
- the sheet material (10) is subjected to sound,
- the sound transmitted through the sheet material (10) and/or reflected on the sheet material (10) is measured at a plurality of places (X) on the sheet material (10),
- at least one value (W) characteristic of the transmitted and/or reflected sound is generated for each of the places (X), and
- verification of thickness modulations is done by comparing the values (W) with predetermined reference values (R), **characterized in that**
the values (W) are compared with the reference values (R) using a correlation factor that is determined by multiplying the individual values (W) by the reference values (R) and averaging the thus obtained results, there not being used for the comparison with the reference values (R) those values (W) that are located in the area of disturbances, in particular due to creases, soiling, foreign bodies or wear, of the thickness modulations to be verified.

2. The method according to claim 1, **characterized in that** the places (X) where the transmitted or reflected sound is measured are located on at least one track (25) extending linearly on the sheet material (10).

3. The method according to either of claims 1 and 2, **characterized in that** reference values (R) with a periodic pattern are predetermined.

4. The method according to claim 3, **characterized in that** reference values (R) with a sinusoidal pattern are predetermined.

5. The method according to either of claims 3 and 4, **characterized in that** a certain spatial frequency is predetermined for the periodic pattern of the reference values (R).

6. The method according to any of claims 3 to 5, **characterized in that** the values (W) and the reference values (R) are shifted relative to each other before comparison so as to reduce a phase difference possibly present between the values (W) and the reference values (R).

7. The method according to claim 1 or 2, **characterized in that** reference values (R) with a non-periodic pattern, in particular one containing a coding, are predetermined.

8. The method according to any of claims 1 to 7, **characterized in that** the values (W) and/or the reference values (R) are standardized before multiplying the individual values (W) by the reference values (R).

9. The method according to any of claims 1 to 8, **characterized in that** the correlation factor is compared with at least one predetermined threshold value.

## Revendications

1. Procédé de vérification de modulations d'épaisseur, notamment de filigranes (20), dans ou sur du produit en feuilles (10), consistant en ce que
- le produit en feuilles (10) est soumis à un son,
- le son transmis par le produit en feuilles (10) et/ou réfléchi au niveau du produit en feuilles (10) est mesuré à plusieurs endroits (X) du produit en feuilles (10),
- pour chacun des endroits (X), au moins une valeur (W) caractéristique du son transmis et/ou réfléchi est générée et
- la vérification des modulations d'épaisseur a lieu par comparaison des valeurs (W) avec des valeurs de référence (R) données, **caractérisé en ce**
**que**, pour la comparaison des valeurs (W) avec les valeurs de référence (R), un facteur de corrélation est adopté, qui est déterminé par multiplication des différentes valeurs (W) avec les valeurs de référence (R) et par calcul de la moyenne des résultats ainsi obtenus, les valeurs (W) qui se trouvent dans la zone de défauts, dus notamment à des froissures, salissures, corps étrangers ou usure, des modulations d'épaisseur à vérifier, n'étant pas adoptées pour la comparaison avec les valeurs de référence (R).

2. Procédé selon la revendication 1, **caractérisé en ce que** les endroits (X) auxquels le son transmis ou réfléchi est mesuré se trouvent sur au moins un tracé évoluant (25) linéairement sur le produit en feuilles (10).

3. Procédé selon une des revendications 1 ou 2, **caractérisé en ce que** des valeurs de référence (R) présentant une courbe périodique sont données.

4. Procédé selon la revendication 3, **caractérisé en ce que** des valeurs de référence (R) présentant une courbe sinusoïdale sont données.

5. Procédé selon une des revendications 3 ou 4, **caractérisé en ce que**, pour la courbe périodique des valeurs de référence (R), une fréquence spatiale déterminée est donnée.

6. Procédé selon une des revendications de 3 à 5, **caractérisé en ce que** les valeurs (W) et les valeurs de référence (R) sont, avant la comparaison, déplacées de telle manière les une par rapport aux autres qu'une différence de phase existant le cas échéant entre les valeurs (W) et les valeurs de référence (R) est amoindrie.

7. Procédé selon la revendication 1 ou 2, **caractérisé en ce que** des valeurs de référence (R) présentant une courbe non périodique, comprenant notamment une codification, sont données.

8. Procédé selon une des revendications de 1 à 7, **caractérisé en ce que**, avant la multiplication des différentes valeurs (W) avec les valeurs de référence (R), les valeurs (W) et/ou les valeurs de référence (R) sont normées.

9. Procédé selon une des revendications de 1 à 8, **caractérisé en ce que** le facteur de corrélation est comparé avec au moins une valeur seuil donnée.
